# EUROPÄISCHE PATENTANMELDUNG

(11) **EP 1 139 600 A2**
(43) Veröffentlichungstag der Anmeldung: **04.10.2001**
(21) Anmeldenummer: 01000067.7
(22) Anmeldetag: 23.03.2001
(51) Int. Cl.: H04L 7/04, H04L 7/10, H04B 7/26

(54) **Synchronisierung eines Netzelements eines analogen, zellularen Netzwerks**

(30) Priorität: 29.03.2000 DE 10015630
(71) Anmelder: Philips Corporate Intellectual Property GmbH, 52064 Aachen (DE); Koninklijke Philips Electronics N.V., 5621 BA Eindhoven (NL)
(72) Erfinder: Richter, Thomas, 52064, Aachen (DE)
(74) Vertreter: Volmer, Georg, Dipl.-Ing.

(57) **Zusammenfassung**

Die Erfindung betrifft ein Netzelement eines analogen, zellularen Netzwerks, insbesondere ein Mobilfunkgerät oder eine Basisstation, sowie ein Verfahren für ein solches. Um eine bessere Erkennung von Breitbanddaten, übertragen in Form einer Datensequenz mit einer Anfangssynchroniäerung (DOT1), einer Wortsynchronisierung (WS), einem Datenwort (REP1) und einer festgelegten Anzahl von Wiederholungen einer Synchronisierung (DOT), einer Wortsynchronisierung (WS) und des Datenwortes (REP1-REP11), zu ermöglichen, weist das Netzelement neben Empfangsmitteln zum Empfangen von Breitband-Datensequenzen auch Auswertmitteln auf zum Erkennen, daß eine Übertragung einer Datensequenz erfolgt, wenn eine Anfangssynchronisierung (DOT1) erkannt wurde oder alternativ eine der weiteren Synchronisierungen (DOT) gefolgt von einer korrekten Wortsynchronisierung (WS) erkannt wurde, und zum Auswerten der jeweils im Anschluß an eine erkannte und von einer Wortsynchronisierung (WS) gefolgten Anfangssynchronisierung (DOT1) bzw. an eine erkannte und von einer korrekten Wortsynchronisierung (WS) gefolgten weiteren Synchronisierung (DOT) empfangenen Datenwörter (REP1-REP11).

## Beschreibung

Die Erfindung betrifft ein Netzdement eines analogen, zellularen Netzwerks, insbesondere ein Mobilfunkgerät oder eine Basisstation, sowie ein Verfahren für ein Netzelement eines analogen, zellularen Netzwerks zum Empfangen einer Breitband-Datensequenz, zusammengesetzt aus einer Anfangssynchronisierung, einer Wortsynchronisierung, einem Datenwort und einer festgelegten Anzahl von Wiederholungen einer weiteren Synchronisierung, einer Wortsynchronisierung und des Datenvertes.

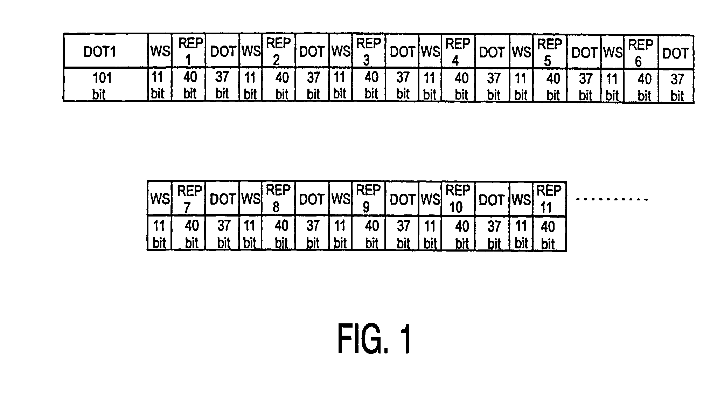

Die Übertragung von Daten in dem eingangs angegebenen Format ist beispielsweise für den US-System AMPS (Advanced Mobile Phone System) aus den Standards TIA/EIA/IS-91 ("Mobile Station - Land Station Compatibility Standard for 800 MHz Analog Cellular", 1994) und TIA/EIA/IS-136.2-A("TDMACellular/PCS -Radio Interface - Mobile Station - Base Station Compatibility - Traffic Channels and FSK Control Channel" Oktober 1996) für den Nachrichtenkanal (Forward Voice Channel; FVC) von einer Basisstation zu einem Mobilfunkgerät vorgesehen. Die für diesen Kanal einzusetzende Datensequenz beträgt 1032 bit und ist für ein zu übertragenes Wort beispielhaft in Figur 1 dargestellt. Auf eine lange Anfangssynchronisierung "DOT1" von 101 bit folgt eine Wortsynchronisierung "WS" mit 11 bit und die erste Übertragung des zu übertragenen Datenwortes "REP1" mit 40 bit. Es schließen sich 10 Wiederholungen einer kürzeren Synchronisierung "DOT" mit 37 bit, einer Wortsynchronisierung "WS" mit 11 bit und des zu übertragenen Datenwortes "REP2-REP11" an. Sowohl die Anfangssynchronisierung (DOT1) als auch die weiteren Synchronisierungen (DOT) bestehen dabei aus einer "Dotting"-Sequenz, die aus sich abwechselnden Nullen und Einsen besteht.

Derartige Breitband-Datensequenzen werden zur Übertragung eines einzelnen Datenwortes beispielsweise für Handover-Anforderungen einer Basisstation an ein Mobilfunkgerät während einer laufenden analogen Sprachübertragung eingesetzt, um bei schlechter Empfangsqualität einen Wechsel des Mobilfunkgeräts auf einen Kanal mit besserer Empfangsqualität zu veranlassen.

Soll mehr als nur ein Datenwort übertragen werden, beispielsweise im Rahmen von Kurzmitteilungen (Short messages) oder für einen Austausch von Authentifizierungsdaten, so wird die in Figur 1 dargestellte Datensequenz von 1032 bit nacheinander für jedes der zu übertragenden Datenwörter zugrundegelegt.

Bei einer analogen Sprachübertragung muß der Teil eines Netzelementes, der die Aufgabe hat, empfangene Datensequenzen zu dekodieren, während der Sprachübertragung kontinuierlich den Audiostrom überwachen, um eine mögliche Breitband-Datenübertragung zu detektieren. Für normale Implementierungen im Rahmen des AMPS wird die Erkennung einer 101 bit Anfangssynchronisierung genutzt um anzunehmen, daß eine Datenübertragung begonnen hat. Das Netzwerkelement muß sich dann im Anschluß entsprechend der 101-bit Anfangssynchronisierung und der Wortsynchronisierung synchronisieren, bevor die verschiedenen Wiederholungen des eigentlichen Datenwortes empfangen werden können. Jede der Wiederholungen des Datenwortes ist dabei üblicherweise mit einem 40,28 BCH (Bose-Chaudhuri-Hocquenghem) Code codiert, wodurch einige Fehler in dem Datenwort erkannt und eventuell sogar korrigiert werden können. Nachdem das Netzwerkelement die elf Wiederholungen des Datenwortes empfangen hat, kann es eine Auswahlprozedur auf die gespeicherten Wiederholungen des Datenwortes anwenden und das schließlich ausgewählte Datenwort einer weiteren Verarbeitung zuführen.

Die aus der Praxis bekannten Implementierungen weisen den Nachteil auf, daß keine Erfassung von Datenwörtern einer empfangenen Datensequenz erfolgt, wenn die Anfangssynchronisierung aufgrund schlechter Empfangsbedingungen nicht erkannt wurde, so daß die Nachricht in diesem Fall verloren ist. Als Folge können beispielsweise erforderliche Handover nicht durchgeführt werden, so daß in einem besonders ungünstigen Fall eine laufende Sprachverbindung unterbrochen werden kann.

Der Erfindung liegt die Aufgabe zugrunde, ein Netzelement und ein Verfahren für ein analoges, zellulares Netzwerk zu schaffen, die eine bessere Erkennung von Breitbanddaten, übertragen in Form einer Datensequenz mit einer Anfangssynchronisierung, einer Wortsynchronisierung, einem Datenwort und einer festgelegten Anzahl von Wiederholungen einer Synchronisierung, einer Wortsynchronisierung und des Datenwortes, ermöglichen.

Die Aufgabe wird zum einen gelöst durch ein Netzelement mit den Merkmalen aus Anspruch 1.

Zum anderen wird die Aufgabe gelöst durch ein Verfahren gemäß Anspruch 6.

Das erfindungsgemäße Netzdement und das erfindungsgemäße Verfahren weisen den Vorteil auf, daß Nachrichten, die mit dem festgelegten Datenformat zwischen Elementen des Netzwerkes versandt werder, mit einer größeren Wahrscheinlichkeit richtig empfangen werden. Dieser Vorteil kommt immer dann zum Tragen, wenn aufgrund schlechter Empfangsbedingungen die Anfangssynchronisierung in dem empfangenden Netzelement nicht auswertbar ist. Die Empfangsbedingungen können dabei vor allen durch Fading und Interferenzen, aber auch durch andere Störungen beeinträchtigt werden.

Mit dem erfindungsgemäßen Netzelemente und dem erfindungsgemäßen Verfahrens kann somit vor allem die Qualität von Verbindungen für die Übertragungen von aus einem Wort bestehenden Steuersignalen verbessert werden, durch auch aus Sicht des Mobilfunkteilnehmers die Leistungsfähigkeit der Mobilfunkgeräte und des Netzwerks erhöht wird.

Der Einsatz der Erfindung ist vor allem in Übertragungen von einer Basisstation zu einem Mobilfunkgerät in dem für AMPS definierten Nachrichtenkanal zu sehen. Sie ist jedoch weder beschränkt auf solche Übertragungen noch auf Datensequenzen mit den hierfür angegebenen Anzahlen von Wiederholungen und den hierfür angegebenen Längen der einzelnen Teile einer Datensequenz.

Bevorzugte Ausführungsformen der erfindungsgemäßen Netzelemente gehen aus den Unteransprüchen hervor.
Die Erfindung wird im folgenden anhand eines Ausführungsbeispiels unter Bezugnahme auf Zeichnungen näher erläutert. Dabei zeigt
- Fig. 1: eine Datensequenz entsprechend dem für AMPS definierten Nachrichtenkanal für Übertragungen von Basisstation zu Mobilfunkgerät;
- Fig. 2a: eine mit einem Netzelement des Standes der Technik auswertbare Datensequenz gemäß Fig 1;
- Fig 2b: eine mit einem Netzelement gemäß Erfindung auswertbare Datensequenz gemäß Fig. 1;
- Fig. 2c: eine zweite mit einem Netzelementen des Standes der Technik auswertbare Datensequenz;
- Fig. 2d: eine zweite mit einem Netzelement gemäß Erfindung auswertbare Datensequenz gemäß Fig. 1;
- Fig. 3a: eine dritte mit einem Netzelementen des Standes der Technik auswertbare Datensequenz;
- Fig. 3b: eine dritte mit einem Netzelement gemäß Erfindung auswertbare Datensequenz gemäß Fig. 1;
- Fig. 4a: ein Beispiel für zwei aufeinanderfolgende Datensequenzen ohne Störung der zweiten Anfangssynchronisierung;
- Fig. 4b: eine Grafik zum bitweisen Empfang der Anfangssynchronisierung bei einer zweiten Anfangssynchronisierung ohne Störung;
- Fig. 4c: eine Grafik zum bitweisen Empfang der Anfangssynchronisierung bei einer zweiten Anfangssynchronisierung mit geringfügiger Störung;
- Fig. 4d: ein Beispiel für zwei aufeinanderfolgende Datensequenzen mit stark gestörter zweiter Anfangssynchronisierung; und
- Fig 5: ein weiteres Beispiel für zwei aufeinanderfolgende Datensequenz mit stark gestörter zweiter Anfangssynchronisierung.

Figur 1 wurde bereits in der Einleitung beschrieben.

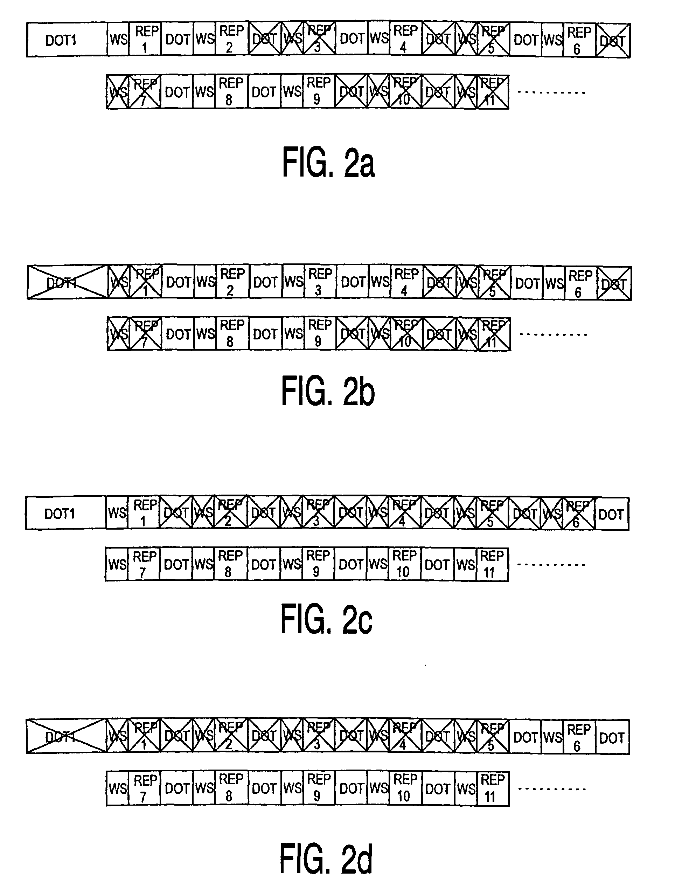

Die Figuren 2a-2d zeigen wie bereits Figur 1 jeweils eine Datensequenz von 1032 bit entsprechend der Definition von Datenkanälen in dem Standard AMPS.

Es wird angenommen, daß der korrekte Empfang von 6 Blöcken bestehend aus Anfangssynchronisierung DOT1 bzw. Synchronisierung DOT, Wortsynchronisierung WS und jeweils einer Wiederholung des Datenworts REP1-REP11 ausreicht, um zu garantieren, daß das übertragene Datenwort richtig erkannt werden kann. Der korrekte Empfang eines Blocks beinhaltet dabei, daß eine Synchronisierung DOT1,DOT gefunden wurde, daß die Wortsynchronisierung WS wie erwartet empfangen wurde und daß in der BCH-Dekodierung des Datenwortes REP1-REP11 kein Fehler auftrat. Da der überwiegende Teil der Wiederholungen REP1-REP11 in diesem Fall ohne erkennbaren Fehler empfangen wurden und nur eine Minderzahl, nämlich maximal 5 von 11 Datenwörtern REP1-REP11, falsch dekodiert wurden oder überhaupt nicht dekodiert werden konnten, trifft diese Annahme mit einer hohen Wahrscheinlichkeit zu. Die Suche nach einer Synchronisierung erfolgt kontinuierlich, wobei in Abhängigkeit von der Implementierung eine kurze oder eine lange Synchronisierung erwartet werden kann.

Nach dem Stand der Technik müssen die erste Synchronisierungs-Sequenz, also die Anfangssynchronisierung mit 101 bit, die sich anschließende Wortsynchronisierung WS und das sich daran anschließende Datenwort REP1 und mindestens 5 weitere Blöcke korrekt empfangen werden. Das entspricht mit 592 bit der insgesamt 1032 bit einem Prozentsatz von 57% der Datensequenz. In Figur 2a sind beispielhaft Blöcke durchkreuzt, die bei nach dem Stand der Technik empfangenen Datensequenzen gestört sein können, ohne daß dies einen Einfluß auf Gewinnung des interessierenden Datenwortes REP1-REP11 hat.

Wird dagegen ein Netzwerkelement gemäß der Erfindung eingesetzt so muß die Anfangssynchronisierung DOT1 nicht notwendigerweise korrekt empfangen werden, vielmehr genügt die Erkennung von 6 beliebigen Blöcken innerhalb der Datensequenz. So kommt auch die Datensequenz in Figur 2b für einen korrekten Empfang in Betracht, in der die Blöcke zur ersten, fünften, siebten, zehnten und elften Wiederholung des Datenwortes REP1,REP5,REP7,REP10,REP11 nicht korrekt empfangen werden konnten, was wiederum durch Durchkreuzen der Blöcke verdeutlicht ist.

Mit einem erfindungsgemäßen Netzelement reichen demnach bereits 528 bit der 1032 bit oder 51 % der Datensequenz als Grundlage für eine Auswertung. Das bedeutet eine Erhöhung der Empfangssicherheit um etwa 6 %, wobei zusätzlich mehr Möglichkeiten der Verteilung der 6 korrekt zu empfangenden Blöcke innerhalb der Datensequenz möglich sind.

Auch wenn man die maximal erlaubten Längen einer Störung der Datensequenz untersucht, gelangt man mit den Netzelementen und dem Verfahren gemäß Erfindung zu einer vorteilhafteren Datenerkennung.

Bislang dürften maximal fünf zusammenhängende Blöcke mit kurzer, d.h. 37 bit Synchronisierung DOT gestört sein, wie dies beispielhaft in Figur 2c dargestellt ist. Die maximal tolerierbare Ausfalldauer lag damit bei 5 x 88 bit = 440 bit. Das entspricht einer Zeitdauer von 44 ms bei einem Datenstrom mit 10 kbit/s.

Da die erfindungsgemäßen Netzelemente aber auch Datensequenzen akzeptieren, bei denen die Anfangssynchronisierung DOT1 gestört ist, wie in Figur 2d dargestellt und die Anfangssynchronisierung DOT1 mit 101 bit länger ist als die 37 bit Synchronisierungen DOT einer Datensequenz, kann mit erfindungsgemäßen Netzelementen die maximal tolerierbare Ausfallzeit auf 504 bit = 50,4 ms erhöht werden. Wenn die Ausfallzeit bereits vor dem Eintreffen der Anfangssynchronisierung DOT1 begonnen hat, darf eine Ausfallzeit im Einzelfall sogar noch länger andauern.

Bezogen auf die maximal tolerierbare Ausfallzeit innerhalb einer Datensequenz liefert die Erfindung eine Verbesserung von bis zu 14%, da bis zu 14% längere Ausfallzeiten aufgrund von Fading-Löchern etc. als bislang akzeptiert werden können. Die gesamten 14% erhält man immer dann, wenn tatsächlich die komplette Anfangssynchronisierung DOT1 gestört ist. Die bisherigen Implementierungen erlauben dagegen überhaupt kein Erkennen des Datenstroms, wenn die Anfangssynchronisierung DOT1 gestört ist.

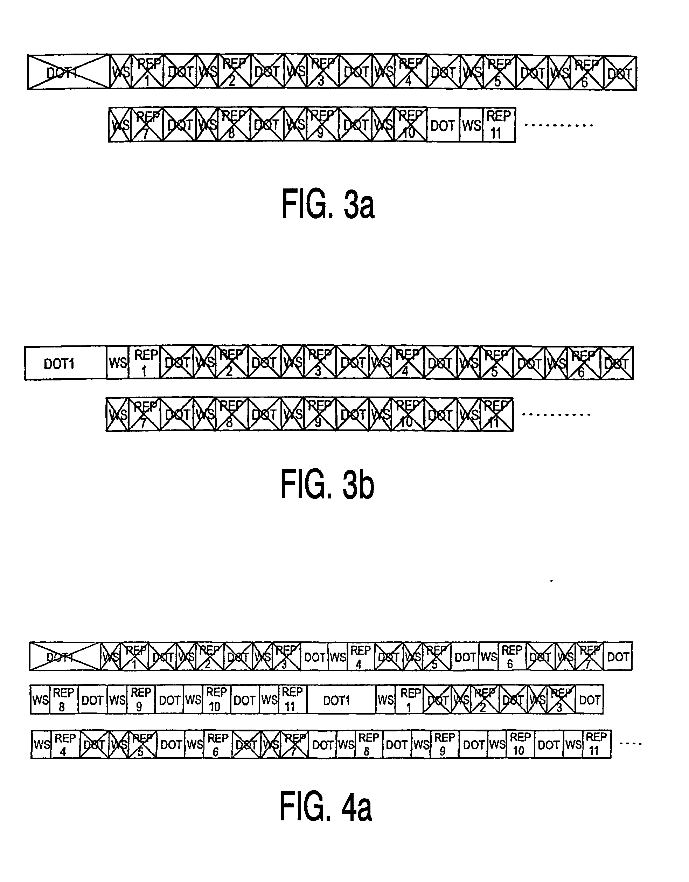

Die den Figuren 2a,b,c,d und 3a,b zugrundeliegende Auswahlstrategie basiert auf der Annahme, daß die Mehrzahl der Wiederholungen des Datenwortes REP1-REP11, die von der Basisstation übertragen wurden, dekodiert werden kann und daß die dekodierten Datenwörter untereinander gleich sein müssen. Nach einer anderen Auswahlstrategie werden alle korrekt empfangenen Wiederholungen eines Datenwortes REP1-REP11 der Auswahl zugrunde gelegt, unabhängig von der Anzahl der korrekt empfangen Wiederholungen des Datenwortes. Stehen nach der Dekodierung unterschiedliche Versionen des Datenwortes zur Verfügung, so wird diejenige als richtig angenommen, die am häufigsten auftritt.

Mit dieser Auswahlstrategie können generell längere Ausfallzeiten akzeptiert werden, als mit der zu den Figuren 2 und 3 beschriebenen, da minimal nur ein Block korrekt empfangen werden muß. Bei den Netzelementen aus dem Stand der Technik ist dieser mindestens eine Block jedoch notwendigerweise der erste Block mit der Anfangssynchronisierung DOT1 gemäß Figur 3a, da nur bei erkannter Anfangssynchronisierung DOT1 überhaupt ein Empfang einer Datensequenz angenommen wird. Die maximal tolerierbare Ausfallzeit liegt also hier bei 880 bit = 88,0 ms bzw. bei 85% der Gesamtzeit (wiederum bei einem Datenstrom von 10 kbit/s).

Für die erfindungsgemäßen Netzelemente kommt bei der zweiten Annahmestrategie dagegen ein beliebiger Block für den mindestens einen korrekt zu empfangenden Block in Frage. Da hier auch die Anfangssynchronisierung DOT1 mit einer Länge von 101 bit ausfallen kann, liegt die maximal tolerierbare Ausfallzeit in diesem Fall bei 944 bit = 94,4 ms bzw. bei 91 % der Gesamtzeit, nämlich dann, wenn der korrekt empfangene Block wie in Figur 3b der letzte Block der Datensequenz ist.

Der korrekte Empfang einer Nachricht mit mehreren Wörtern mag für den Mobilfunkteilnehmer gegenüber dem Empfang von Nachrichten mit einem Wort, insbesondere von Handover-Nachrichten, von untergeordneter Bedeutung sein. Auch der Empfang solcher Nachrichten kann aber mit den erfindungsgemäßen Netzelementen und dem erfindungsgemäßen Verfahren verbessert werden, wie im folgenden im einzelnen ausgeführt wird. Dabei wird zunächst die erste Auswahlstrategie zugrundegelegt, bei der mindestens 6 Blöcke einer Datensequenz korrekt empfangen werden müssen.

Eine gesonderte Betrachtung von Mehrwortnachrichten ist deshalb erforderlich, weil solche Nachrichten aus einer Aneinanderreihung mehrerer Datensequenzen bestehen, die jeweils der Übertragung eines mehrfach wiederholten Datenwortes REP1-REP11 dienen. Wird die Anfangssynchronisierung DOT1 einer der Datensequenzen nicht erkannt, so ist nicht klar, welche der erkannten Blöcke welcher Datensequenz zugeordnet werden müssen.

Wurde die Anfangssynchronisierung DOT1 der ersten Datensequenz ungestört empfangen, so kann aufgrund der bekannten Länge der Datensequenzen die zweite Datensequenz unabhängig von der Erkennung der zweiten Anfangssynchronisierung DOT1 erfaßt werden.

Ist die Anfangssynchronisierung DOT1 der ersten Datensequenz bereits gestört und wird beispielsweise als erstes erst der vierte Block der ersten Datensequenz korrekt empfangen, wie in Figur 4a zu sehen, so ist zunächst nicht erkennbar, bis wohin die erste Datensequenz reicht. Wird aber die Anfangssynchronisierung DOT1 der zweiten Datensequenz entsprechend Figur 4a korrekt empfangen, so ist das Ende der ersten Datensequenz eindeutig abgeschlossen und die zweite Datensequenz kann wie üblich empfangen und ausgewertet werden.

Schwieriger wird es, wenn nach nicht erkannter Anfangssynchronisierung DOT1 der ersten Datensequenz auch die Anfangssynchronisierung DOT1 der zweiten Datensequenz gestört ist. Für diese Fälle wird sinnvollerweise unterschieden zwischen einer leicht gestörten und einer erheblich gestörten Anfangssynchronisierung DOT1 der zweiten Datensequenz.

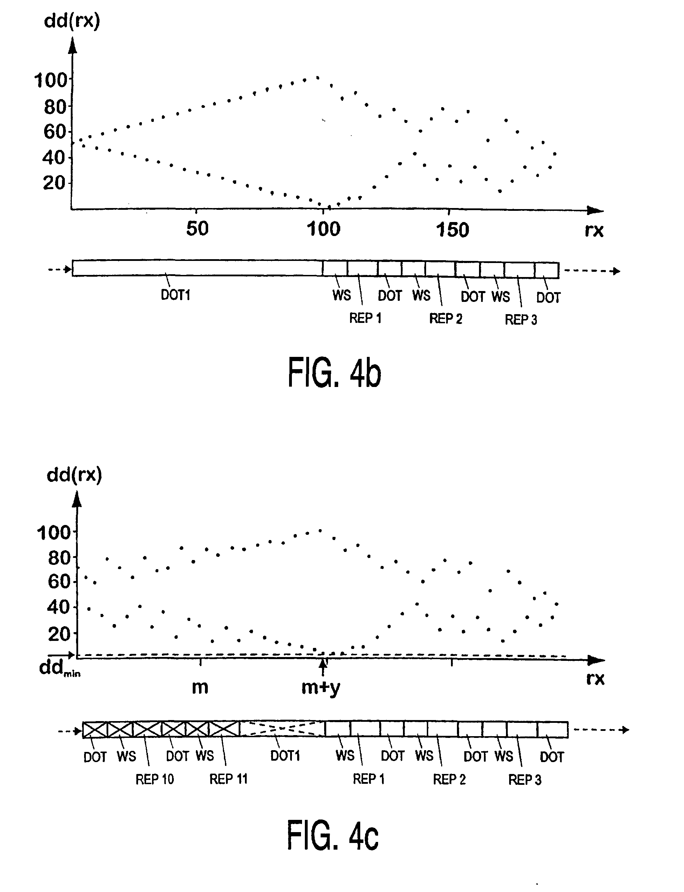

Leicht gestörte Anfangssynchronisierungen DOT1 lassen sich mit einer kontinuierlichen Messung detektieren, die stets die letzten empfangenen 101 bits des Datenstroms in einem Datenpuffer speichert. Die gespeicherten Bits werden ebenfalls kontinuierlich mit einer separat abgespeicherten, korrekten Sequenz der Anfangssynchronisierung DOT1 verglichen. Bei dem Vergleich wird ständig die Anzahl der voneinander abweichenden bits dd(rx) bestimmt. In Figur 4b ist zunächst das Ergebnis einer solchen Messung der Anzahl dd(rx) der Abweichungen über den empfangenen Bits rx(data bit) für eine korrekt empfangene Anfangssynchronisierung DOT1 dargestellt. Die Anfangssynchronisierung DOT1 von 101 bit bestehe dabei aus einer Sequenz von aufeinander folgenden Einsen und Nullen "101010...10101". Der Anschaulichkeit halber wurde angenommen, daß der Datenpuffer, in den die 101 bit für den Vergleich geschoben werden, zu Beginn mit Nullen vorbesetzt ist. Außerdem ist für eine bessere Übersichtlichkeit nur eine verringerte Anzahl an Bits dargestellt.

Wenn in dem Datenpuffer genau die 101 bit einer Anfangssynchronisierung DOT1 abgelegt sind rx(101), so ergibt der Vergleich mit der erwarteten Sequenz bei korrekter Anfangssynchronisierung DOT1 eine Anzahl von null Abweichungen dd(rx). Bei der weiteren Durchschleusung der ankommenden Bits durch den Datenpuffer wird eine Anzahl von null Abweichungen nicht mehr erreicht, die Anzahl bewegt sich bei zufällig verteilten Daten vielmehr um einen Wert von 50 herum, bis die nächste Anfangssynchronisierung 101 eingeht.

Wird anstelle einer korrekten jedoch eine gestörte Anfangssynchronisierung DOT1 empfangen, so kann die Anzahl von null Abweichungen nie erreicht werden. In dem in Figur 4c dargestellten Verlauf der erfaßten Anzahl der Abweichungen dd(rx) bei einer gestörten Anfangssynchronisierung wird nur ein minimaler Wert von ddₘᵢₙ erreicht. Eine nur in wenigen Bits verfälschte Anfangssynchronisierung DOT1 kann aber mit hoher Wahrscheinlichkeit erkannt werden, wenn die kontinuierlich erfaßte Anzahl der Abweichungen dd(rx) eine festgelegte Anzahl nahe Null unterschreitet. Beispielsweise kann eine während des Vergleichs erreichter minimale Anzahl von ddₘᵢₙ = 5 als ausreichend angesehen werden, um eine Anfangssynchronisierung DOT1 mit 101 bit zu erkennen. Sobald eine definierter minimale Anzahl ddₘᵢₙ erreicht wurde, wird ein Wechsel von einer ersten Datensequenz zu einer zweiten Datensequenz angenommen. Die Erfassung von Wiederholungen der Datenwörter wird deshalb für das erste Datenwort beendet und statt dessen für das nächste Datenwort weitergeführt. Die erfaßten Wiederholungen des ersten Datenwortes REP1-REP11 können nun dem Auswahlprozeß zugeführt werden. Die Daten, die während der 101 bit Anfangssynchronisierung DOT1 erfaßt wurden, müssen verworfen werden, da eine bitgenaue Erfassung einer gestörten Anfangssynchronisierung ausgeschlossen ist.

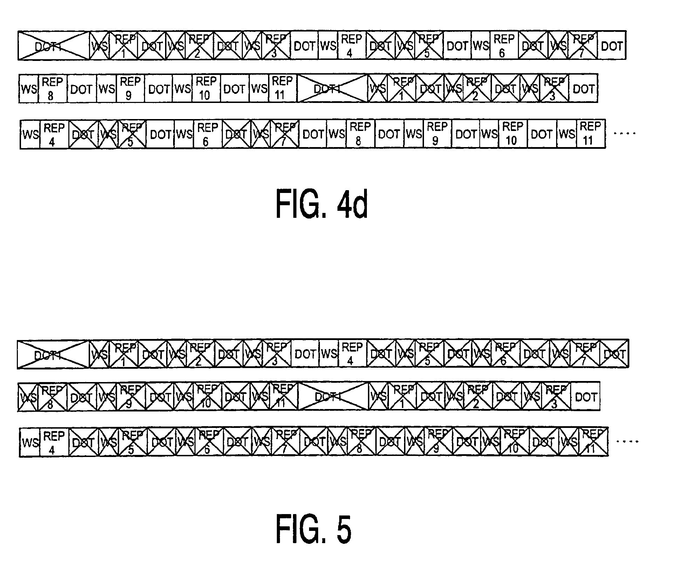

Stark gestörte Anfangssynchronisierungen DOT1 lassen sich allerdings auch mit dieser Methode nicht detektieren. Zwei aufeinanderfolgende Datensequenzen mit den Wiederholungen von zwei verschiedenen Datenwörtern und jeweils einer stark gestörten Anfangssynchronisierung DOT1 sind in Figur 4d dargestellt.

Sowohl in der ersten als auch in der zweiten Datensequenz werden die Blöcke mit der vierten, sechsten, achten neunten, zehnten und elften Wiederholung der Datenwörter korrekt empfangen. Da von dem vierten Block der ersten Datensequenz bis zum vierten Block der zweiten Datensequenz 14 Dekodierversuche erfolgen, jedes Datenwort aber nur 11 mal wiederholt wird, ist bekannt, daß der korrekt empfangene vierte Block der zweiten Datensequenz auch zu dieser gehören muß.

Im ungünstigsten Fall werden die letzten sechs Blöcke der ersten Datensequenz korrekt empfangen, so daß die Auswertmittel des Netzelementes noch mit bis zu vier weiteren Wiederholungen des gleichen Datenwirtes rechnen müssen. In der zweiten Datensequenz werden dann noch vier Versuche unternommen, um weitere Wiederholungen des ersten Datenwortes zu dekodieren, davon zwei während der 101 bit Anfangssynchronisierung DOT1 der zweiten Datensequenz. Insgesamt können damit bis zu drei korrekt dekodierte Wiederholungen des zweiten Datenwortes REP1-REP3 fälschlicherweise der Auswahlprozedur für das erste Datenwort zugefügt werden. In Abhängigkeit von den Reset-Bedingungen der Implementierung des Algorithmus kann nämlich beispielsweise auch eine gestörte Anfangssynchronisierung DOT1 des zweiten Datenwortes als weitere 37-bit Synchronisierung DOT des ersten Datenwortes aufgefaßt werden. Die verbleibenden acht Wiederholungen des zweiten Datenwortes REP4-REP11 können für die Auswahl desselben zugrunde gelegt werden. Es können somit sogar noch zwei der Wiederholungen des zweiten Datenwortes REP4-REP11 ohne Einschränkung der Brauchbarkeit des zweiten Datenwortes verloren gehen, um auf die erforderlichen sechs korrekt empfangenen Blöcke zu kommen.

Dajeder der Blöcke mit 37-bit Synchronisierung DOT bei einem Datenstrom von 10 kbit/s eine Dauer von 8.8 ms aufweist, können die Auswertmittel des Netzelementes alternativ auch überprüfen, ob zwischen zwei korrekt erkannten Blöcken ein durch 8.8 teilbarer Zeitraum liegt.

Ist dies nicht der Fall, so wird angenommen, daß zwischen den zwei Blöcken ein Block mit einer nicht erkannten 101- bit Anfangssynchronisierung DOT1 liegt und daß der zweite Block somit bereits zu einer anderen Datensequenz gehört.

Die Erfindung ist also auch in dem Fall einsetzbar in dem die Anfangssynchronisierung DOT1 einer zweiten Datensequenz stark gestört ist, allerdings mit der Konsequenz, daß für den Empfang des nächsten Datenwortes eine geringere Anzahl an Wiederholungen zur Verfügung steht.

Auch für Mehrwortübertragungen kommt die zweite der aufgeführten Auswahlstrategien in Frage. Ist hier die Anfangssynchronisierung DOT1 sowohl der ersten Datensequenz als auch der zweiten Datensequenz gestört, wie in Figur 5 dargestellt, so ist ein Zuordnen von korrekt erfaßten Blöcke zu den verschiedenen Datenwörtern allerdings nur dann möglich, wenn die Zeitspanne zwischen dem Beginn des ersten korrekt erfaßten Blocks bis zum Beginn eines weiteren korrekt erfaßten Blocks mindestes die Länge einer kompletten Datensequenz, also hier von 1032 bit bzw. von 103,2 ms aufweist. Zumindest wenn diese Bedingung erfüllt ist, kann aber eine gestörte Mehrwortübertragung korrekt erfaßt werden. Schließlich sei noch darauf hingewiesen, daß die erfindungsgemäßen Netzelemente und das erfindungsgemäße Verfahren auch für solche Datensequenzen einsetzbar sind, bei denen nicht alle Blöcke das gleiche Datenwort enthalten, sondern bei denen alternierend wiederholt zwei oder mehr Datenwörter enthalten sind Entsprechend muß dann je nach Auswahlstrategie jeweils mindestens eines oder mindestens eine bestimmte Anzahl von jedem der unterschiedlichen Datenwörter korrekt empfangen werden, um eine Auswertung zu gestatten.

## Patentansprüche

1. Netzelement eines analogen, zellularen Netzwerks, insbesondere ein Mobilfunkgerät oder eine Bassstation, mit Empfangsmitteln zum Empfangen einer Breitband-Datensequenz, zusammengesetzt aus einer Anfangssynchronisierung (DOT1), einer Wortsynchronisierung (WS), einem Datenwort (REP1) und einer festgelegten Anzahl von Wiederholungen einer weiteren Synchronisierung (DOT), einer Wortsynchronisierung (WS) und des Datenwortes (REP2-REP11), sowie mit Auswertmitteln zum Erkennen, daß eine Übertragung einer Datensequenz erfolgt, wenn eine Anfangssynchronisierung (DOT1) erkannt wurde oder alternativ eine der weiteren Synchronisierungen (DOT) gefolgt von einer korrekten Wortsynchronisierung (WS) erkannt wurde, und zum Auswerten der jeweils im Anschluß an eine erkannte und von einer Wortsynchronisierung (WS) gefolgten Anfangssynchronisierung (DOT1) bzw. an eine erkannte und von einer korrekten Wortsynchronisierung (WS) gefolgten weiteren Synchronisierung (DOT) empfangenen Datenwörter (REP1-REP11).

2. Netzelement nach Anspruch 1,
**dadurch gekennzeichnet,**
**dass** die Auswertmittel geeignet sind, eine empfangene Datensequenz dann einer Auswahl eines Datenwortes zugrunde zu legen, wenn mindestens eine festgelegte Anzahl an korrekt empfangenen Wiederholungen des Datenwortes (REP1-REP11) aus der Datensequenz vorhanden ist.

3. Netzelement nach einem der voranstehenden Ansprüche
**dadurch gekennzeichnet,**
**dass** die Auswertmittel geeignet sind, von den empfangenen Wiederholung eines Datenwortes (REP1-REP11) in einer Datensequenz für eine Weiterverarbeitung diejenige auszuwählen, die am häufigsten auftritt.

4. Netzelement nach einem der voranstehenden Ansprüche,
**dadurch gekennzeichnet,**
**dass** die Auswertmittel einen Speichern zum Speichern einer korrekten Anfangssynchronisierung (DOT1) und einen Datenpuffer mindestens von der Größe der Anfangssynchronisierung zum bitweisen Aufnehmen und Durchschieben der empfangenen Daten aufweisen, sowie Vergleichsmittel zum kontinuierlichen bitweisen Vergleichen des Speicherinhalts mit dem Datenpufferinhalt und zum Bestimmen der Anzahl (dd(rx)) der sich unterscheidenden Bits, wobei die Auswertmittel geeignet sind, auf eine eingegangene Anfangssynchronisierung (DOT1) zu schließen, wenn die Anzahl (dd(rx)) der sich unterscheidenden Bits eine festgelegte Anzahl (ddₘᵢₙ) unterschreitet, und auf eine korrekt eingegangene Anfangssynchronisierung (DOT1), wenn die Anzahl (dd(rx)) der sich unterscheidenden Bits Null erreicht.

5. Netzelement nach einem der voranstehenden Ansprüche,
**dadurch gekennzeichnet,**
**dass** die Auswertmittel geeignet sind, bei gestörten Anfangssynchronisierungen (DOT1) von zwei unmittelbar aufeinanderfolgenden Datensequenzen nach Ablauf der zeitlichen Länge einer Datensequenz ab Beginn einer ersten erkannten und von einer korrekten Wortsynchronisierung (WS) gefolgten weiteren Synchronisierung (DOT) einen Wech-sel zu der zweiten Datensequenz anzunehmen.

6. Verfahren für ein Netzelement eines analogen, zellularen Netzwerks, insbesondere ein Mobilfunkgerät oder eine Barsstation, zum Empfangen einer Datensequenz, zusammengesetzt aus einer Anfangssynchronisierung (DOT1), einer Wortsynchronisierung (WS), einem Datenwort (REP1) und einer festgelegten Anzahl von Wiederholungen einer weiteren Synchronisierung (DOT), einer Wortsynchronisierung (WS) und des Datenwortes (REP2-REP11), das die folgenden Schritte aufweist:
a) kontinuierliches Überwachen auf ankommende Breitband-Datenströmen zum Erkennen, ob eine an das Netzelement gerichtete Datenübertragung erfolgt,
b) Ermitteln, ob in empfangenen Datenströmen eine Anfangssynchronisierung (DOT1) erkannt werden kann oder ob eine weitere Synchronisierung (DOT) gefolgt von einer korrekten Wortsynchronisierung (WS) erkannt werden kann, und
c) Auswerten der auf eine erkannte Anfangssynchronisierung (DOT1) oder auf eine Kombination von einer weiteren erkannten Synchronisierung (DOT) und einer korrekten empfangenen Wortsynchronisierung (WS) folgenden Datenwörter (REP1-REP11).
